# EUROPÄISCHE PATENTSCHRIFT

(11) **EP 0 975 414 B1**
(45) Veröffentlichungstag und Bekanntmachung des Hinweises auf die Patenterteilung: **03.04.2002**
(21) Anmeldenummer: 98921415.0
(22) Anmeldetag: 02.04.1998
(51) Int. Cl.: B01D 53/14, C10K 1/08

(54) **VERFAHREN ZUM REGENERIEREN EINER BELADENEN WASCHFLÜSSIGKEIT AUS EINER ANLAGE ZUR GASENTSCHWEFELUNG**
METHOD FOR REGENERATING A LOADED WASH LIQUID FROM A GAS DESULFURIZATION FACILITY
PROCEDE DE REGENERATION D'UN LIQUIDE DE LAVAGE CHARGE PROVENANT D'UNE INSTALLATION DE DESULFURATION DE GAZ

(30) Priorität: 18.04.1997 DE 19716310
(43) Veröffentlichungstag der Anmeldung: 02.02.2000
(73) Patentinhaber: MG Technologies AG, 60325 Frankfurt am Main (DE)
(72) Erfinder: GRÜNEWALD, Gerhard, D-55122 Mainz (DE); ZWIEFELHOFER, Uwe, D-61267 Neu-Anspach (DE)
(74) Vertreter: Revesz, Veronika
(86) Internationale Anmeldenummer: EP9801910
(87) Internationale Veröffentlichungsnummer: WO9847602

(56) Entgegenhaltungen:
- EP-A- 0 081 241
- DE-A- 3 148 519
- DE-A- 3 718 457
- FR-A- 2 344 624

## Beschreibung

Die Erfindung betrifft ein Verfahren nach Anspruch 1 zum Regenerieren einer beladenen Waschflüssigkeit, die aus einer Anlage zur Entschwefelung eines Wasserstoff und Kohlen-oxide enthaltenden Gasgemisches kommt und als Beladung H2S, CO, H2, CO2 und Nickel- und/oder Eisencarbonyl enthält, wobei man die Waschflüssigkeit nach einer Heißregene-rierung zur Entschwefelung wiederverwendet.

Entschwefelungsverfahren und die zugehörige Regenerierung beladener Waschflüssigkeiten sind bekannt und z. B. im deutschen Patent DE-C-39 22 785 und im dazu korrespondierenden US-Patent US-A-5 085 675 beschrieben. Die Regenerierung der beladenen Waschflüssigkeiten erfolgt in bekannter Weise durch eine oder mehrere der Maßnahmen Entspannen, Strippen und Erhitzen, wobei man in einem Behälter auch zwei oder drei dieser Maßnahmen gleichzeitig anwenden kann.

Die EP-A 00 81241 beschreibt ein Verfahren nach dem Oberbegriff von Anspruch 1.

Insbesondere beim Verwenden physikalisch wirkender Waschflüssigkeiten können Metall-carbonyle beim Regenerieren zu Störungen führen, weil sie sich beim Erwärmen des Wasch-mittels zu Sulfiden umsetzen und dabei unerwünschte Ablagerungen bilden. Bei diesen Carbonylen handelt es sich vor allem um Nickelcarbonyle, z. B. Ni(CO)4, und Eisen-carbonyle, insbesondere Fe(CO)5.
Der Erfindung liegt deshalb die Aufgabe zugrunde, die Metallcarbonyle an geeigneter Stelle so weitgehend zu Sulfiden umzusetzen und aus der Waschflüssigkeit zu entfernen, dass Schwierigkeiten in der Entschwefelungsanlage und in nachgeschalteten Anlagen vermieden werden.
Erfindungsgemäß gelingt dies durch die Merkmale von Anspruch 1.

In den Nickel- und Eisencarbonylen ist das CO koordinativ an das Metallatom gebunden, so dass die Carbonyle zu Sulfiden (NiS oder FeS) in der beladenen Waschflüssigkeit umgewandelt werden, sobald man das CO aus der Waschflüssigkeit mindestens teilweise entfernt. Diese CO-Entfernung kann auf verschiedene Weise und insbesondere durch Ent-spannen und/oder Strippen der Waschflüssigkeit erfolgen. Dabei ist es günstig, die Tempe-ratur der beladenen Waschflüssigkeit z. B. durch indirekten oder direkten Wärmeaustausch mit heißregenerierter Waschflüssigkeit vor der CO-Entfernung zu erhöhen.

Üblicherweise führt man die Entschwefelung bei einem Druck im Bereich von 10 bis 100 bar durch, so dass die beladene Waschflüssigkeit vor der Reaktions- und Absetzzone auf einfache Weise um eine Druckdifferenz von mindestens 3 bar entspannt werden kann, wobei ein CO-haltiges Entspannungsgas freigesetzt wird. Nach dieser Freisetzung des CO setzt die allmähliche Umwandlung der Nickel- und Eisencarbonyle in der Waschlösung zu unlöslichen Sulfiden ein. Es kann zweckmäßig sein, das freigesetzte Entspannungsgas mit regenerierter Waschflüssigkeit zu waschen, um Carbonyle in Lösung zu halten.

Vorzugsweise liegt der Druck in der Reaktions- und Absetzzone im Bereich von 1 bis 20 bar und zumeist bei mindestens 3 bar, die Temperatur liegt üblicherweise im Bereich von 0 bis 150 °C und vorzugsweise bei mindestens 40 °C. Es ist vorteilhaft, dafür zu sorgen, dass das in der beladenen Waschflüssigkeit vorhandene H₂S und auch das CO₂ in der Reaktions- und Absetzzone nicht oder möglichst nur in geringem Maße freigesetzt wird und dort nur die Nickel- und/oder Eisensulfide ausfallen. Deshalb ist es zweckmäßig, den Druck in der Reaktions- und Absetzzone höher als in der Heißregenerierung zu halten.

Um die Metallsulfide in der Reaktions- und Absetzzone möglichst gut von der Waschflüssigkeit abzutrennen, empfiehlt es sich, die Waschflüssigkeit mit ausreichender Verweilzeit durch die Reaktions- und Absetzzone zu leiten und die Waschflüssigkeit möglichst langsam zu bewegen, so dass sich die Sulfide allmählich absetzen können. Für Nickelcarbonyle reichen hierbei üblicherweise Verweilzeiten im Bereich von 5 bis 80 Minuten und zumeist 15 bis 60 Minuten, während für Eisencarbonyle Verweilzeiten von etwa 1 - 10 Stunden erforderlich sind, vorzugsweise mindestens 3 Stunden.

Das erfindungsgemäße Verfahren eignet sich für die Behandlung unterschiedlicher Waschflüssigkeiten, z.B. Methanol, N-Methylpyrrolidon (NMP) oder Dimethylether von Polyethylenglycol (DMPEG). Üblicherweise handelt es sich hierbei um physikalisch wirkende Waschflüssigkeiten. Das zu entschwefelnde Gasgemisch kommt aus der Vergasung fester oder flüssiger kohlenstoffhaltiger Materialien, z. B. Schweröl, Kohle, Petrolkoks, asphalthaltige Kohlenwasserstoffe, Destillationsrückstände oder Mischungen dieser Materialien. Die Vergasung findet hierbei in bekannter Weise durch partielle Oxidation mit Luft, mit sauerstoffangereicherter Luft oder mit technisch reinem Sauerstoff sowie zumeist unter Zugabe von Wasserdampf statt.

Ausgestaltungsmöglichkeiten des Verfahrens werden mit Hilfe der Zeichnung erläutert. Es zeigt:
- Fig. 1: das Fließschema einer Anlage zum Behandeln eines Vergasungs-Rohgases und zum Regenerieren einer beladenen Waschflüssigkeit (nicht unter Anspruch 1 fallend),
- Fig. 2: einen horizontalen Schnitt entlang der Linie I - I durch den Reaktions- und Absetzbehälter der Fig. 1 in vergrößerter Darstellung,
- Fig. 3: die Ansicht des Einlassrohrs des Reaktions- und Absetzbehälters der Fig. 1 und 2, entgegengesetzt zur Richtung des Pfeils A in Fig. 2 gesehen und
- Fig. 4: eine Variante zum Fließschema der Fig. 1.

Beim Verfahren der Fig. 1 wird davon ausgegangen, dass ein Schweröl durch partielle Oxidation vergast wird, doch kann das erfindungsgemäße Verfahren auch in Anlagen zur Vergasung anderer fester oder flüssiger Materialien verwendet werden.

Dem leeren Vergasungsreaktor (1) führt man durch die Leitung (2) Schweröl zu und vergast dieses Schweröl mit Sauerstoff aus der Leitung (3) und Wasserdampf aus der Leitung (4) bei Temperaturen im Bereich von 800 bis 1400 °C. Es entsteht ein Wasserstoff, Kohlenoxide und Ruß enthaltendes Rohgas, das man durch den Kanal (6) in einen Waschkühler (7) leitet, in welchem das Rohgas mit Wasser aus der Leitung (8) besprüht wird. Rußwasser wird in der Leitung (9) abgezogen. Das so grob gereinigte Rohgas gelangt in der Leitung (10) zu einem Sprühkühler (11), in welchem das Gas mit teilweise im Kreislauf geführtem Wasser besprüht und weitergekühlt wird. Das aus dem Kühler (11) in der Leitung (12) ablaufende Wasser wird teilweise in der Leitung (13) entfernt, das restliche Wasser wird durch die Leitung (14) zu einem indirekten Kühler (15) geführt und über die Kreislaufpumpe (16) zurück in den Kühler (11) gegeben. Frisches Wasser kommt aus der Leitung (17).

Das im Sprühkühler (11) behandelte Gasgemisch wird durch die Leitung (19) einer Entschwefelungskolonne (20) aufgegeben, wo es im Gegenstrom mit Waschflüssigkeit aus der Leitung (21) vor allem von H₂S weitgehend befreit wird. Gereinigtes Gas zieht in der Leitung (22) ab.

Der Druck und die Temperatur in der Entschwefelungskolonne (20) werden angepasst an die verwendete Waschflüssigkeit in bekannter Weise geeignet gewählt, wobei die Temperaturen bei der Verwendung von NMP höher liegen können als bei Methanol als Waschflüssigkeit. Üblicherweise liegen die Temperaturen in der Entschwefelungskolonne (20) im Bereich von + 60 °C bis - 60 °C und man arbeitet bei einem Druck im Bereich von 10 bis 100 bar.

Die beladene Waschflüssigkeit, die man aus der Kolonne (20) in der Leitung (25) abzieht, enthält H₂S, CO₂, CO, H₂ und je nach Metallgehalt im zu vergasenden Material auch Nickel- und/oder Eisencarbonyle. Im indirekten Wärmeaustauscher (26) wird die beladene Waschflüssigkeit angewärmt und dann in den Entspannungsbehälter (27) hinein entspannt. Zweckmäßigerweise liegt der Druck im Behälter (27) um mindestens 3 bar und vorzugsweise mindestens 5 bar niedriger als in der Entschwefelungskolonne (20).

Bei der Entspannung der beladenen Waschflüssigkeit in den Entspannungsbehälter (27) hinein wird ein Entspannungsgas freigesetzt, welches auch Kohlenmonoxid enthält. Dieses Entspannungsgas zieht man in der Leitung (28) ab und führt es zunächst durch den Kühler (50) und dann durch die Waschkolonne (51), um bei der Entspannung freigesetzte Carbonyle zu entfernen. Regenerierte Waschflüssigkeit kommt aus der Leitung (21 a) und wird nach der Benutzung in der Leitung (52) zum Behälter (27) geführt.

Um im Behälter (27) das Austreiben von CO noch zu verstärken, kann es vorteilhaft sein, ein Strippgas, z. B. Stickstoff oder Methanoldampf, zusätzlich durch die Leitung (29) in den unteren Bereich des Entspannungsbehälters (27) zu leiten. Alternativ kann dieses Strippen auch in einer separaten Kolonne durchgeführt werden. Die teilentspannte Waschflüssigkeit wird dann durch die Leitung (30) zu einem Reaktions- und Absetzbehälter (31) geführt, von welchem Einzelheiten in den Fig. 2 und 3 dargestellt sind. Im Behälter (31) fällt ein Sulfidschlamm aus, der vor allem aus Nickel- und/oder Eisensulfid besteht und in der Leitung (32) abgezogen wird. Die von Carbonylen weitgehend befreite Waschflüssigkeit gelangt vom Behälter (31) durch die Leitung (34) in die Heißregenerierung (35), wo beim Regenerieren H₂S entfernt wird. Abweichend von der vereinfachten Darstellung der Fig. 1 kann die Heißregenerierung auch aus mehreren Behandlungsstufen bestehen und z. B. zusätzlich noch mit Strippgas-Zufuhr arbeiten.

Regenerierte Waschflüssigkeit zieht man in der Leitung (36) ab, kühlt sie im indirekten Wärmetauscher (26) und führt sie durch die Leitung (21) zurück zur Entschwefelungskolonne (20) und zur Kolonne (51). Das Regenerations-Abgas, das in der Leitung (38) anfällt und vor allem aus H₂S besteht, kann einer an sich bekannten, nicht dargestellten, Clausanlage zugeführt werden.

Einzelheiten des Reaktions- und Absetzbehälters (31) werden mit Hilfe der Fig. 2 und 3 erläutert. In diesem Behälter (31) wird dafür gesorgt, dass die Waschflüssigkeit langsam und mit ausreichender Verweilzeit vom Einlassrohr (40) bis zum Auslassrohr (41) fließt. Gleichzeitig sorgt man für eine maximale Höhe der Flüssigkeit von 2 bis 40 m. Damit sich die gebildeten Sulfide im Behälter (31) möglichst ungehindert absetzen können, strömt die Flüssigkeit horizontal vom Einlassrohr (40) durch zahlreiche Öffnungen (42), vgl. Fig. 3, zunächst in Richtung des Pfeils (A) einen durch Trennwände (43) gebildeten Zickzack-Weg, vgl. Fig. 2, zum Auslassrohr (41). Das Auslassrohr (41) kann ebenfalls mit Öffnungen versehen sein, wie das in Fig. 3 für das Einlassrohr dargestellt ist. Die im Auslassrohr (41) angekommene Flüssigkeit strömt in der Sammelleitung (34) ab und wird zur Heißregenerierung (35) geführt. Während des etwa horizontalen Strömens der Waschflüssigkeit vom Einlassrohr (40) zum Auslassrohr (41) können die gebildeten Sulfide nach unten absinken, sich im Sumpf (31a) des Behälters (31) sammeln (vgl. Fig. 1) und durch die Leitung (32) abgezogen werden. Um zu verhindern, dass sich Sulfide auch bereits im Einlassrohr (40) sammeln, ist hierfür ebenfalls eine Abzugsleitung (45) mit Ventil (46) vorgesehen, vgl. Fig. 3.

Der Sulfidschlamm, der sich am Boden des Behälters (31) absetzt, wird in Zeitabständen durch Öffnen eines nicht dargestellten Ventils durch die Leitung (32) abgezogen und gelangt in den beheizten Aufbereitungsbehälter (55). Dämpfe der Waschflüssigkeit gibt man durch die Leitung (56) in die Heißregenerierung (35). Falls erforderlich, kann man durch die Leitung (57) Waschwasser in den Behälter (55) geben. Der in der Leitung (58) abgezogene Sulfidschlamm, der nun weniger Schadstoffe enthält, wird in einen nicht dargestellten Sammeltank geleitet.

Bei der Verfahrensführung der Fig. 4 wird dafür gesorgt, dass man vor allem Eisencarbonyle enthaltende Waschflüssigkeit zumindest teilweise getrennt von vor allem Nickelcarbonyle enthaltender Waschflüssigkeit abziehen kann. Zu diesem Zweck ist die Entschwefelungskolonne (20), die bereits zusammen mit Fig. 1 beschrieben wurde, mit einem gasdurchlässigen Boden (60) versehen. Das durch die Leitung (19) eintretende Gasgemisch wird zunächst mit einem Teilstrom der regenerierten Waschflüssigkeit in Kontakt gebracht, der aus der Leitung (21a) kommt. Dabei werden bevorzugt Eisencarbonyle von der Flüssigkeit aufgenommen und durch den indirekten Wärmeaustauscher (26), den Entspannungsbehälter (27) und die Leitung (30) zum Reaktions- und Absetzbehälter (31) geführt. Im Behälter (31) wird für eine relativ lange Verweilzeit von 1 bis 10 Stunden und zumeist mehreren Stunden gesorgt, bevor man den Eisensulfid enthaltenden Schlamm durch die Leitung (32) abzieht. Kleine Mengen an NiS' sind im Schlamm der Leitung (32) ebenfalls enthalten.

Die Teilmenge an gebrauchter Waschflüssigkeit, die man in der Leitung (25 a) abzieht, führt man durch den Wärmeaustauscher (26a) und den Entspannungsbehälter (27a) zum zweiten Reaktions- und Absetzbehälter (31a). Dort kann man nach relativ kurzer Verweilzeit von 5 bis 80 Minuten durch die Leitung (32a) einen vor allem Nickelsulfid enthaltenden Schlamm abziehen.

## Patentansprüche

1. Verfahren zum Regenerieren einer beladenen Waschflüssigkeit, die aus einer Anlage zur Entschwefelung eines Wasserstoff und Kohlenoxide enthaltenden Gasgemisches kommt, einen Druck von 10 bis 100 bar aufweist und als Beladung H₂S, CO, H₂, CO₂, Nickelcarbonyl und Eisencarbonyl enthält, wobei man die beladene Waschflüssigkeit um eine Druckdifferenz von mindestens 3 bar teilweise entspannt und ein CO-haltiges Entspannungsgas freisetzt, Metallcarbonyle mindestens teilweise zu Metallsulfiden umsetzt und Metallsulfide aus der Waschflüssigkeit abtrennt, die Waschflüssigkeit durch eine Heißregenerierung führt und regenerierte Waschflüssigkeit zur Entschwefelung wiederverwendet, **dadurch gekennzeichnet, dass** man das H₂ und CO enthaltende Gasgemisch
a) in einer ersten Waschzone mit einem ersten Teilstrom (21a) regenerierter Waschflüssigkeit in Kontakt bringt und einen ersten Strom (25) beladener Waschflüssigkeit aus der ersten Waschzone abzieht, der H₂S, CO, H₂, CO₂ und vor allem Eisencarbonyl enthält, dass man den ersten Strom kühlt (26), teilweise entspannt (27) und ein erstens CO-haltiges Entspannungsgas freisetzt, in einer ersten Reaktions- und Absetzzone (31) bei einer Verweilzeit von 1 bis 10 Stunden einen Eisensulfid enthaltenden ersten Schlamm absetzt und Schlamm abzieht und den ersten Strom zur Heißregenerierung (35) führt, und
b) dass man das aus der ersten Waschzone kommende Gasgemisch in einer zweiten Waschzone mit einem zweiten Teilstrom (21) regenerierter Waschflüssigkeit in Kontakt bringt und einen zweiten Strom (25a) beladener Waschflüssigkeit aus der zweiten Waschzone abzieht, der H₂S, CO, H₂, CO₂ und vor allem Nickelcarbonyl enthält, dass man den zweiten Strom kühlt (26a), teilweise entspannt (27a) und ein zweites CO-haltiges Entspannungsgas freisetzt, in einer zweiten Reaktions- und Absetzzone (31a) bei einer Verweilzeit von 5 bis 80 Minuten einen Nickelsulfid enthaltenden zweiten Schlamm absetzt und Schlamm abzieht und den zweiten Strom zur Heißregenerierung (35) führt.

2. Verfahren nach Anspruch 1, **dadurch gekennzeichnet, dass** der Druck in den Reaktions- und Absetzzonen (31, 31a) im Bereich von 1 bis 20 bar liegt.

3. Verfahren nach Anspruch 1, **dadurch gekennzeichnet, dass** die Temperatur in den Reaktions- und Absetzzonen (31, 31a) im Bereich von 0 bis 150 °C liegt.

4. Verfahren nach Anspruch 1, **dadurch gekennzeichnet, dass** die maximale Flüssigkeitshöhe in den Reaktions- und Absetzzonen (31, 31a) 2 bis 40 m beträgt.

## Claims

1. Process for regenerating a loaded washing liquid which comes from a plant for the desulphurisation of a gas mixture containing hydrogen and carbon oxides, which has a pressure of between 10 and 100 bar, and which contains as its load H₂S, CO, H₂, CO₂, and nickel carbonyl and/or iron carbonyl, where the loaded washing liquid is partly expanded by a pressure differential of at least 3 bar and an expansion gas containing CO is released, where metal carbonyls are at least partly converted into metal sulphides, and metal sulphides are removed from the washing liquid, and where the washing liquid passes through a hot regeneration process, and regenerated washing liquid is re-used for desulphurisation, **characterised by** the fact that the gas mixture containing H₂ and CO
a) is brought into contact in a first washing zone with a first component stream (21a) of regenerated washing liquid, and a first stream (25) of loaded washing liquid is drawn off from the first washing zone, said first stream containing H₂S, CO, H₂, Co₂, and - primarily - iron carbonyl; that the first stream is cooled (26), partly expanded (27), and a first CO-containing expansion gas released; in a first reaction and settling zone (31), with a residence time of between 1 and 10 hours, a first sludge containing iron sulphide is precipitated, and sludge is drained off, and the first stream is passed to the hot regeneration process (35), and
b) that the gas mixture from the first washing zone is brought into contact in a second washing zone with a second component stream (21) of regenerated washing liquid, and a second stream (25a) of loaded washing liquid is drawn off from the second washing zone, said second stream containing H₂S, CO, H₂, Co₂, and - primarily - nickel carbonyl; that the second stream is cooled (26a), partly expanded (27a), and a second CO-containing expansion gas released; in a second reaction and settling zone (31a), with a residence time of between 5 and 80 minutes, a second sludge containing nickel sulphide is precipitated, and sludge is drained off, and the second stream is passed to the hot regeneration process (35).

2. Process as in Claim 1, **characterised by** the fact that the pressure in the reaction and settling zones (31, 31a) is between 1 and 20 bar.

3. Process as in Claim 1, **characterised by** the fact that the temperature in the reaction and settling zones (31, 31a) is between 0° C and 150° C.

4. Process as in Claim 1, **characterised by** the fact that the maximum depth of liquid in the reaction and settling zones is between 2 and 40 metres.

## Revendications

1. Procédé de régénération d'un liquide de lavage chargé, qui provient d'une installation de désulfuration d'un mélange gazeux contenant de l'hydrogène et des oxydes de carbone, qui a une pression de 10 à 100 bars et qui contient comme charge H₂S, CO, H₂, CO₂, du nickel carbonyle et du fer carbonyle, en détendant partiellement le liquide de lavage chargé d'une différence de pression d'au moins 3 bars et en dégageant du gaz de détente contenant du CO, en transformant les métaux carbonyles au moins partiellement en sulfures métalliques et en séparant des sulfures métalliques du liquide de lavage, le liquide de lavage passant dans une régénération à chaud et le liquide de lavage régénéré étant réutilisé pour la désulfuration, **caractérisé en ce que** l'on met le mélange gazeux contenant H₂ et CO
a) dans une première zone de lavage, en contact avec un premier courant (21a) partiel de liquide de lavage régénéré et l'on soutire de la première zone de lavage un premier courant (25) de liquide de lavage chargé qui contient H₂S, CO, H₂, CO₂ et surtout du fer carbonyle, **en ce que** l'on refroidit (26) le premier courant, on le détend (27) partiellement et on laisse se dégager un gaz de détente contenant du CO, on décante dans une première zone (31) de réaction et de décantation, pendant une durée de séjour de 1 à 10 heures, une première boue contenant du sulfure de fer et on retire la boue et on envoie le premier courant à la régénération (35) à chaud et
b) le mélange gazeux, venant de la première zone de lavage, dans une deuxième zone de lavage, en contact avec un deuxième courant (21) partiel de liquide de lavage régénéré et on soutire un deuxième courant (25a) de liquide de lavage chargé de la deuxième zone de lavage, qui contient H₂S, CO, H₂, CO₂ et surtout du nickel carbonyle, **en ce que** l'on refroidit (26a) le deuxième courant, on le détend (27a) partiellement et on laisse se dégager un deuxième gaz de détente contenant du CO, on décante dans une deuxième zone (31) de réaction et de décantation pendant une durée de séjour de 5 à 80 minutes, une deuxième boue contenant un sulfure de nickel et on retire la boue et on envoie le deuxième courant à la régénération (35) à chaud.

2. Procédé suivant la revendication 1, **caractérisé en ce que** la pression dans les zones (31, 31a) de réaction et de décantation est de l'ordre de 1 à 20 bars.

3. Procédé suivant la revendication 1, **caractérisé en ce que** la température dans les zones (31, 31a) de réaction et de décantation est de l'ordre de 0 à 150°C.

4. Procédé suivant la revendication 1, **caractérisé en ce que** la hauteur maximum du liquide dans les zones (31, 31a) de réaction et de décantation est de 2 à 40 m.
